# EUROPEAN PATENT SPECIFICATION

(11) **EP 2 065 850 B1**
(45) Date of publication and mention of the grant of the patent: **22.12.2010**
(21) Application number: 08165995.5
(22) Date of filing: 07.10.2008
(51) Int. Cl.: G06Q 30/00

(54) **Method, system and apparatus for collecting user information**
Verfahren, System und Vorrichtung zum Erfassen von Benutzerinformationen
Procédé, système et dispositif de collecte d`informations d`utilisateurs

(30) Priority: 29.11.2007 CN 200710196566
(43) Date of publication of application: 03.06.2009
(73) Proprietor: Huawei Technologies Co., Ltd., Longgang District, Shenzhen Guangdong 518129 (CN)
(72) Inventor: Wu, Xueqi, Shenzhen Guangdong 518129 (CN)
(74) Representative: Thun, Clemens

(56) References cited:
- EP-A- 1 819 130
- US-A1- 2006 224 682
- US-A1- 2007 150 426

## Description

### Field

The present invention relates to telecommunication technologies, and in particular, to a method, system and apparatus for collecting user information.

### Background

With the popularity of mobile phones, short messages become a means of information propagation and advertisement.

However, when mobile phone users receive short messages unrelated or unappealing to them, they tend to delete the short messages almost without browsing the details of the messages or even complain to operators about the "spam" messages. This poor targeted push service is costly to the message publisher, and can hardly solicit pertinent users. Therefore, to achieve a good effect of publishing messages, it is good for the message publisher to know the interests of users, and publish messages only to the interested users rather than to all users.

In the current practice, to grasp the interests of users and improve the hit rate of the published messages, the message publisher distributes questionnaires to the users, or requests the users to register the relevant information when the users subscribe to a certain product. The message publisher collects the interests of the users according to the feedback from the users.

The process of collecting user interests according to the user feedback in the questionnaire or registration form is inefficient and costly, and could hardly discover most potential users, and has a low hit rate.

EP 1819130 A1 discloses a method for evaluating data in a data network, the network comprising an evaluation unit and at least two users each having an input unit, whereas the network enables a communication between the at least two users, whereas the communication data input by the users is evaluated by the evaluation unit, thereby generating a profile for one, several or all of the users.

US 2007/150426 A1 discloses a method of classifying an anonymous user communicating over a computer network, such as by age, gender, or personal interests, based on the content generated or otherwise communicated by the user. The method includes: (a) providing sets of reference attributes, wherein each set of reference attributes is associated with one of a number of personal profile classes; (b) analyzing the user content in order to extract a set of attributes corresponding to such content; (c) comparing the set of extracted attributes against the plural sets of reference attributes in order to find a close match; and (d) associating the user with the personal profile class of the snatched set of reference attributes.

US 2006/0224682 A1 discloses a system and method of screening unstructured messages and communications, In one embodiment, messages and communications may be received in the form of email and telephone transcripts. In one embodiment, the present invention includes a method of extracting text from email and telephone transcripts and screening the content of the messages in order to pick out useful and relevant information using a list of words and phrases that can be described as industry recognized words and phrases. Industry recognized words and phrases are matched against the contents of the messages and communications to determine what part of the message or communication is relevant to an aspect of business.

### Summary

The embodiments provide a method, system and apparatus for collecting user information to overcome the inefficiency of collecting user information in the prior art.

A method for collecting user information provided in an embodiment includes:
obtaining short message sent or received by a user, and characteristic of target users which is represented by a keyword and/or an associated word corresponding to the keyword;
determining whether the short message contains one or more words that match the keyword and/or the associated word, if yes, collecting the user information that identifies the user and saving the user information according to the type of characteristics;
when a plurality of short messages contains one or more words that match the keyword and/or the associated word, searching the short messages for word recurring in every short message, and saving the recurring word as associated word corresponding to the keyword .

A system for collecting user information provided in an embodiment includes:
a user characteristics unit (100), adapted to save the characteristic of target users;
a content analyzing unit (200), adapted to obtain short message sent or received by a user, match content of the short message with the characteristic of target users, determine whether the user meets the characteristic of target users according to the match result, collect the user information that identifies the user, and save the user information into a user storage unit (300) if the user meets the characteristic of target users;
a user storage unit (300), adapted to store the user information according to the type of characteristics;
wherein the user characteristics unit (100) further comprises:
a characteristics collection interface unit (102), adapted to receive an input keyword that represents the characteristic of target users;
an associated content storage unit (104), adapted to store the keyword and associated word to the keyword;
a match condition generating unit (106), adapted to search the associated content storage unit (104) for the associated word corresponding to the keyword that represents the characteristic of target users; if any associated word is found, saving
the keyword and the associated word into the match condition storage unit (108) as characteristic of target users; if no associated word is found, saving the keyword that represents the characteristic of target users into the match condition storage unit (108) as characteristic of target users;
and a match condition storage unit (108), adapted to store the characteristic of target users.

By analyzing message or messages sent or received by a user, for example the short messages sent or received by the mobile phone user, it is determined whether the user is among the target users. Target users may be users to be collected. What kind of users to be collected may be predetermined by configuring characteristics of target users, for example information table, key words or table of key words. When the user meets the characteristics of target users, the user's information may be collected and saved, thereby improving the efficiency of collecting user information significantly. To publish messages according to user's interest, users may get what they are interested in, and message publishers may reduce cost and improve hit rate.

### Brief Description of the Drawings

Figure 1 shows a brief structure of a system provided in an embodiment;
Figure 2 is a flowchart of a method provided in an embodiment;
Figure 3 is a flowchart of a method provided in an embodiment;
Figure 4 is a flowchart of a method provided in an embodiment;
Figure 5 is a flowchart of a method provided in an embodiment;
Figure 6 shows a brief structure of an apparatus provided in an embodiment.

### Detailed description

To improve the efficiency of collecting user information, an exemplary embodiment provides a system for collecting user information. By analyzing content of message, for example short messages, emails and instant messages, sent or received by a user, the system determines whether the user meets characteristic of target user, and collects the user information if the user meets the characteristic. Short message is taken an example for describing the following embodiments. Based on these embodiments, the skilled person in the art can infer the processing of other messaging services such as email and instant messaging with similar way of short message. So other message service wouldn't be described in details.

The characteristic may be predetermined by configuration of computer system or input at any time. The system may determine whether the user meets a plurality of characteristics of target users, and collects the user information if the user meets the characteristics.

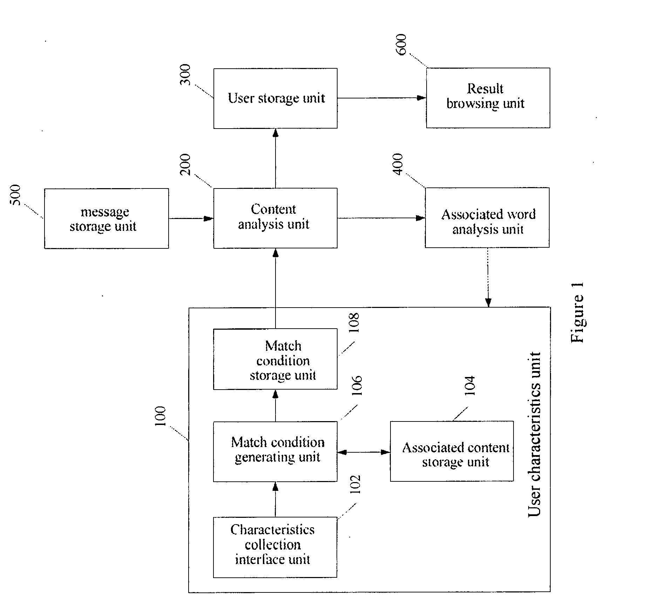

The system for collecting user information provided in an embodiment is described below with reference to Figure 1.

The system for collecting user information provided in an embodiment includes a content analyzing unit 200 and a user storage unit 300.

The content analyzing unit 200 is adapted to (i) obtain short message or messages sent or received by a user, and characteristics of target user; (ii) match the content of the short message with the characteristics of target user, and determine whether the user meets the characteristics of target user according to the match result; and (iii) collect the user information and save the user information into the user storage unit 300 if the user meets the characteristics of target users.

The matching process may be either of the following:
(i) the system matches one short message sent or received by a user with characteristics of target users, and, if the matching succeeds, determines that the user meets the characteristics of target users; and (ii) the system matches a plurality of short messages sent or received by a user with the characteristics of target user, and determines that the user meets the characteristics of target users if: (a) all short messages match the characteristics of target user; or (b) more than a predetermined quantity of short messages match the characteristics of target users; or either (a) or (b) may happen during a time period that the plurality of short messages may be sent or received by the user. The time period may be predetermined or configured by a unit or controlled manually. The preceding embodiment is also applicable to the messaging services such as email and instant messaging.

The collected user information includes but is not limited to: user identifier, number, user location, user profile and/or data that may identify a user.

The user storage unit 300 is adapted to store the user information according to the type of characteristics.

"Storing user information according to the type of characteristics" may mean storing the user information as a type user that meets the characteristics of target users. The user information may be stored in the following two ways: (i) datasheets of different user characteristics may be stored in the user storage unit 300, the datasheets may be identified by a keyword that represents the user characteristics, and the user information is stored into the datasheet corresponding to the characteristics that the user information meets; or (ii) storing the user information and the corresponding keyword that exists in the characteristics of target users.

The system for collecting user information provided in an embodiment may further include a user characteristics unit 100, adapted to save the characteristics information of target users.

The user characteristics unit 100 may include a characteristics collection interface unit 102, an associated content storage unit 104, a match condition generating unit 106, and a match condition storage unit 108.

The characteristics collection interface unit 102 is adapted to receive an input keyword that represents the characteristics of target users.

The associated content storage unit 104 is adapted to store the keyword and the corresponding associated words; the keyword and the corresponding associated words for storage come from the input of the user or other units, where the user may be a system operator, or an information collector and other units include a requesting unit that queries user information, for example, a content server.

The match condition generating unit 106 is adapted to (i) search for the associated words corresponding to the keyword that represents the characteristics of target users in the associated content storage unit 104; (ii) if any associated word is found, save the keyword and the associated word into the match condition storage unit 108 as characteristics of target users; (iii) or, if no associated word is found, save the keyword that represents the characteristics of target users into the match condition storage unit 108 as characteristics of target users.

The match condition storage unit 108 is adapted to store the characteristics of target users.

The content analyzing unit 200 may include an obtaining unit , an analyzing unit and a collecting unit.

The obtaining unit is an optional unit, adapted to obtain the short messages sent or received by a user, and the characteristics of target users.

The analyzing unit is adapted to match the content of the short messages with the characteristics of target users, and determine whether the user meets the characteristics of target users according to the match result. The analyzing unit may match the Unicode of the word contained in the short messages with the Unicode of the keyword and/or associated word in the characteristics of target users. If the matching succeeds, that is, the Unicode of the word contained in the short messages includes the Unicode of the keyword and/or associated word in the characteristics of target users, the analyzing unit determines that the user meets the characteristics of target users; otherwise, the analyzing unit determines that the user does not meet the characteristics of target users. The foregoing embodiments are also applicable to the messaging services such as email and instant messaging.

The collecting unit is adapted to collect the user information and save the user information if the user meets the characteristics of target users.

The content analyzing unit 200 may also be adapted to output and save the short message and the keyword corresponding to the short message. The keyword corresponding to the short message is the keyword in the characteristics of target users. The content analyzing unit 200 may output and save the short message and the corresponding keyword into a match information table. This match information table may be stored in the content analyzing unit 200, associated word analysis unit 400 or any other accessible entity. The system may further include an associated word analysis unit 400, which is adapted to (i) search for a plurality of short messages with the same keyword in the match information table, a plurality of short messages may mean at least two short messages; (ii) find the word that recurs in the plurality of short messages, and (iii) use the recurring word as an associated word corresponding to the keyword and save it in the associated content storage unit 104.

The match condition generating unit 106 may be adapted to update the information stored in the match condition storage unit 108 according to the information in the associated content storage unit 104. The update may be performed periodically or in real time. When a keyword or an associated word is added in the associated content storage unit 104, the added content is saved into the match condition storage unit 108. For example, when a user inputs a keyword "tourism" and associated word "mountaineer clothes" into the associated content storage unit 104, the associated content storage unit 104 saves the input content, and sets an add flag for the input content; then the match condition generating unit 106 updates the content with an add flag in the associated content storage unit 104 into the match condition storage unit 108. In another example, the associated word analysis unit 400 finds the word "skiing kit" associated with the keyword "tourism" by analyzing the short message content in the match information table, and inputs "skiing kit" into the associated content storage unit 104; the associated content storage unit 104 saves the input content as a word associated with the keyword "tourism", and sets a refresh flag for the input content; then the match condition generating unit 106 updates the content with a refresh flag in the associated content storage unit 104 into the match condition storage unit 108.

The system may further include: a message storage unit 500, adapted to obtain short messages or messages sent or received by the user from the short message service center (SMSC) or other message service center, and save the obtained short messages or messages. Therefore, the content analyzing unit 200 may obtain the short messages or messages sent or received by the user from the message storage unit 500.

The system may further include a result browsing unit 600, adapted to receive an external query request, search user storage unit 300.. The user storage unit 300 may stores user information according to the type of characteristics of target users. The result browsing unit 600 searches the user storage unit 300 for the user information that meets the characteristics in the query request, and provide the user information obtained. The way of providing the user information obtained may be: (i) outputting and displaying the user information obtained for query requester to browse; or (ii) sending the user information obtained to the query requester through a message. Further, if no user information that meets the characteristics in the query request is found from the saved user information, the result browsing unit 600 may temporarily obtain the short messages sent and/or received by the user, and match the obtained short messages with the user characteristics, for example, keyword and/or associated word input by the query requester, and provide the user information corresponding to the successfully matched short messages for the query requester.

By analyzing the short messages or messages sent or received by a user, for example the short messages sent or received by the mobile phone user, it is determined whether the user is among the target users. Target users may be users to be collected. What kind of users to be collected may be predetermined by configuring characteristics of target users, for example information table, key words or table of key words. When the user meets the characteristics of target users, the user's information may be collected and saved, thereby improving the efficiency of collecting user information significantly.

A person of ordinary skill in the art could anticipate that the units in the foregoing embodiments can be grouped or combined with each other. The name of the units may be changed, but the changes are still covered in the scope of this disclosure.

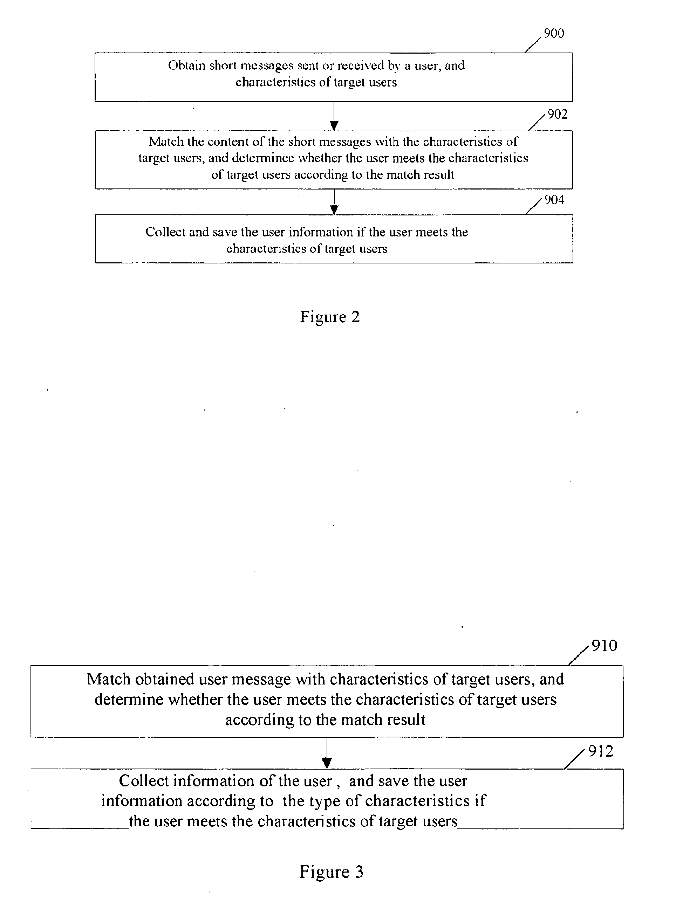

As shown in Figure 2, a method for collecting user information provided in an embodiment includes:
Step 900: obtaining messages sent or received by a user, and saved characteristics of target users. The message may be short message or messages or instant message or email.

The characteristics of target users may be generated in the following way:

Receiving a keyword for representing the characteristics of target users input by an external application; among the saved keywords and associated words, searching for the associated word corresponding to the keyword that represents the characteristics of target users; if the associated word is found, saving the keyword and the found associated word as characteristics of target users; or, if no associated word is found, saving the keyword that represents the characteristics of target users as characteristics of target users. The saved keywords and associated words may derive from input of users such as a system operator or an information collector. In addition, when a keyword and its associated word changes, for example, a new associated word is added for a keyword, the saved characteristics of target users may be updated according to the new associated word. Therefore, the characteristics also include the new associated word to improve the match rate and collect more user information that meets the characteristics.

Alternatively, the keyword input by an external application may be used as characteristics of target users directly.

Step 902: Matching the content of the short messages with the characteristics of target users, and determining whether the user meets the characteristics of target users according to the match result.

The implementation modes may be as follows:

If the characteristics of target users are represented by a keyword and the associated word corresponding to the keyword, the system checks whether a short message contains one or more words that match the keyword or the associated word by analyzing the content of the short messages. If so, it is determined that the user meets the characteristics of target users. In the implementation, the system stores the Unicode of the keyword and/or the associated word in the characteristics of target users in the form of a Hash table; by searching the Hash table, the system matches the Unicode of the word included in a short message with the Unicode of the keyword and/or associated word in the characteristics of target users, and checks whether the Unicode of the word included in the short message includes the Unicode of the keyword and/or the associated word in the characteristics of target users. If so, the system determines that the user meets the characteristics of target users; otherwise, the system determines that the user does not meet the characteristics of target users. The search of a Hash table is efficient. Therefore, it is practicable to match every short message. Considering the request of short message processing capability, multiple threads can be set up to handle multiple short messages simultaneously.

Step 904: Collecting the user information and saving the user information according to the type of characteristics if the user meets the characteristics of target users.

When collecting user information, the system may obtain more associated words from a short message. The process may be as follows:

The system outputs and saves the short message and the keyword corresponding to the short message, where the keyword corresponding to the short message is the keyword that the short message successfully matches with and exists in the characteristics of target users; and the system searches for multiple short messages with the same successfully matched keyword among the output and saved short messages, determines the word that recurs in the content of the multiple short messages, and saves it as a associated word corresponding to the keyword.

An external user sends a query request to the system through a browser or by other means. The query request carries the characteristics of the user to be queried. The external user may be an information content provider, a service provider, a publisher or a system operator. When receiving the query request, the system searches the saved user information for the user that meets the characteristics carried in the query request, and provides the found user information. The way of providing user information may be (i) outputting and displaying the found user information for the query requester to browse; or (ii) sending the found user information to the query requester through a message. Further, if no user information that meets the characteristics included in the query request is found from the saved user information, the system may temporarily obtain the short messages, and match the obtained short messages with the characteristics, and provide the user information corresponding to the successfully matched short messages to the query requester. The foregoing process is also applicable to the messaging services such as email and instant messaging.

A method for collecting user information provided in an embodiment, which is also shown in Figure 3, may include:
Step 910: matching obtained user message with characteristics of target users, and determining whether the user meets the characteristics of target users according to the match result;
Step 912: if the user meets the characteristics of target users, collecting the user information and saving the user information according to the type of characteristics.

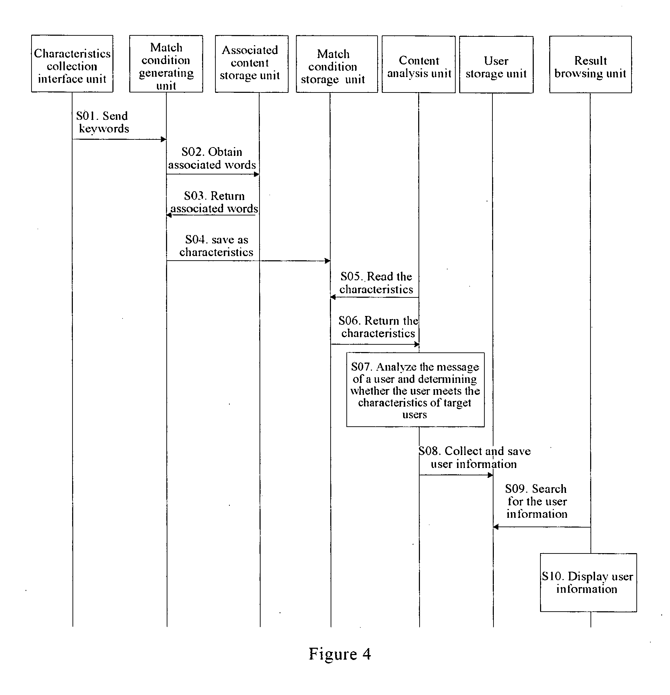

An embodiment is described below, using short messages as an example, with reference to Figure 4..
S01: The characteristics collection interface unit receives a keyword input by an external user for representing the characteristics of target users, and sends the keyword to the match condition generating unit.
S02-S03: The match condition generating unit obtains the associated word corresponding to the keyword from the associated content storage unit.
S04: The match condition generating unit saves the keyword and associated word into the match condition storage unit as characteristics of target users.
S05-S06: The content analyzing unit reads the characteristics of target users from the match condition storage unit.
S07: The content analyzing unit matches a short message sent or received by a user with the read characteristics of target users, and checks whether the content of the short message includes the keyword and/or the associated word contained in the characteristics of target users. If so, the content analyzing unit determines that the user meets the characteristics of target users; otherwise, the content analyzing unit determines that the user does not meet the characteristics of target users.
S08: The content analyzing unit outputs and saves the user information that meets the characteristics of target users and the corresponding keyword into the user storage unit.
S09: Upon receiving a query request from an information publisher, where the query request carries a keyword that represents the characteristics of the user to be queried, the result browsing unit searches the user storage unit for the user information corresponding to the keyword.
S10: The result browsing unit displays the found user information.

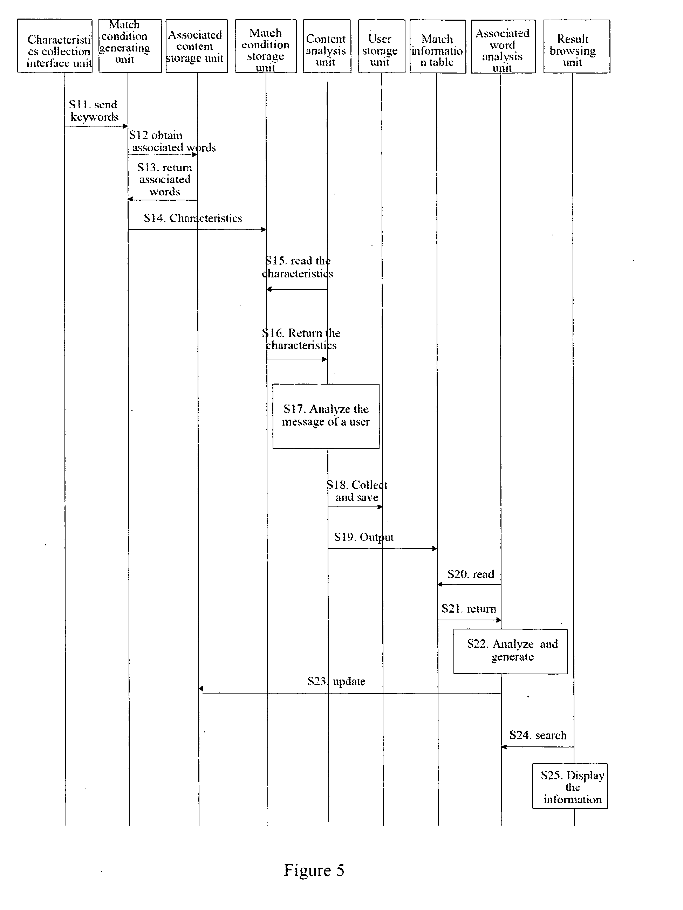

In the foregoing embodiment, the content analyzing unit outputs user information and the corresponding characteristics. It may also output and save the analyzed short messages and the corresponding keywords into the match information table so that the associated word analysis unit can update the information saved in the associated content storage unit according to the match information table. As shown in Figure 5, the process is described below..
S11: The characteristics collection interface unit receives a keyword input by an external user for representing the characteristics of target users, and sends the keyword to the match condition generating unit.
S12-S13: The match condition generating unit obtains the associated word corresponding to the keyword from the associated content storage unit.
S14: The match condition generating unit saves the keyword and the associated word into the match condition storage unit as characteristics of target users.
S15 - S16: The content analyzing unit reads the characteristics of target users from the match condition storage unit.
S 17: The content analyzing unit matches a short message sent or received by a user with the read characteristics of target users, and checks whether the content of the short message includes the keyword and/or the associated word contained in the characteristics of target users. If so, the content analyzing unit determines that the user meets the characteristics of target users; otherwise, the content analyzing unit determines that the user does not meet the characteristics of target users.
S18: The content analyzing unit outputs and saves the user information that meets the characteristics of target users and the corresponding keyword into the user storage unit.
S19: The content analyzing unit saves the short message and the keyword into the match information table.
S20 - S21: The associated word analysis unit reads multiple short messages with the same keyword in the match information table.
S22: The associated word analysis unit analyzes multiple short messages, and uses the word that recurs in multiple short messages as an associated word corresponding to the keyword.
S23: The associated word analysis unit saves the newly generated associated word into the associated content storage unit.
S24: Upon receiving a query request from an information publisher, where the request carries a keyword that represents the characteristics of the user to be queried, the result browsing unit searches the user storage unit for the user information corresponding to the keyword.
S25: The result browsing unit displays the found user information.

The foregoing process is also applicable to the messaging services such as email and instant messaging.

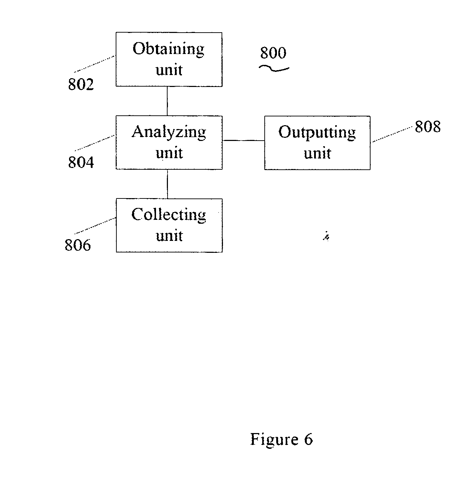

An apparatus 800 for analyzing the content of message provided in an embodiment, as shown in Figure 6, still taking short messages as an example, includes:
an obtaining unit 802, adapted to obtain short message sent or received by a user, and characteristics of target users;
an analyzing unit 804, adapted to match the short messages with the characteristics of target users, and determine whether the user meets the characteristics of target users according to the match result; when obtaining unit 802 is not configured, the analyzing unit 804 may be configured to obtain short message sent or received by a user, characteristics of target users. And analyzing unit 804 is further configured to match the obtained short messages and the characteristic of target users, and to determine whether the user meets the characteristics of target users according to the match result.
a collecting unit 806, adapted to collect the user information if the user meets the characteristics of target users. The collecting unit 806 could further be adapted to save the user information into a user storage unit according to the type of characteristics.

The analyzing unit 804 may also be adapted to match the Unicode of the word carried in a short message with the Unicode of the keyword and/or the associated word in the characteristics of target users; if the matching succeeds, that is, the Unicode of the word contained in the short message includes the Unicode of the keyword and/or the associated word in the characteristics of target users, the analyzing unit determines that the user meets the characteristics of target users; otherwise, the analyzing unit determines that the user does not meet the characteristics of target users.

The apparatus 800 for analyzing the content of short messages further includes an outputting unit 808, adapted to output a short message and the corresponding keyword. The corresponding keyword is a keyword that matches the short message successfully and exists in the characteristics of target users.

The user information in the foregoing embodiments may be user's profile that may identify a user, or information that may show the interest of the user, or address or phone number, and the like.

The user message in the foregoing embodiments may be short message or messages, or emails, or instant messages, and the like.

A technical scheme provided in the foregoing embodiments analyzes the short messages, emails or instant messages sent by a user, determines whether the user meets the characteristics of target users, and collects and saves the user information if the user meets the characteristics of target users, thus improving the efficiency of collecting user information significantly and reducing costs.

The characteristics of target users may include keywords and associated words. Associated words may be added and updated continuously by the user or the associated word analysis unit 400. Therefore, more users that meet the characteristics of target users can be collected, and more potential users that meet the conditions can be discovered.

It is understandable to those skilled in the art that all or part of the steps of the preceding embodiments can be implemented by hardware following instructions of programs. The programs may be stored in a computer-readable storage medium. When the programs are executed, the steps of the foregoing embodiments are executed, and the storage medium may be any medium that can store program codes such as read-only memory (ROM), random access memory (RAM), magnetic disk and compact disk.

Although the technical scheme of the disclosure has been described through some exemplary embodiments, the invention is not limited to such embodiments. It is apparent that one ordinary person skilled in the art can make various modifications and variations to the invention without departing from the scope of the invention. The invention is intended to cover the modifications and variations provided that they fall in the scope of protection defined by the following claims.

## Claims

1. A method for collecting user information, comprising:
obtaining (900) a short message sent or received by a user, and a characteristic of target users which is represented by a keyword and/or an associated word corresponding to the keyword;
determining (902) whether the short message contains one or more words that match the keyword and/or the associated word, if yes, collecting (904) the user information that identifies the user and saving the user information according to the type of characteristics;
**characterized in that**, further comprising:
when a plurality of short messages contains one or more words that match the keyword and/or the associated word, searching (S22) the short messages for a word recurring in every short message, and saving (S23) the recurring word as associated word corresponding to the keyword.

2. The method according to claim 1, **characterized in that** it further comprises:
receiving (S09) an external query request;
searching the user information stored according to the type of the characteristic of target users for the user information that meets a characteristic in the query request; and
providing (S 10) the user information found.

3. The method according to claim 1, **characterized in that** it further comprises:
predetermining the characteristic of target users.

4. The method according to claim 3, **characterized in that** further comprising:
updating the characteristic of target users; the process of updating further comprising:
inputting a keyword that represents the characteristic of target users;
searching for a word associated with the keyword that represents the characteristic of target users in the saved keyword and the associated words corresponding to the keyword;
when associated word is found, saving the keyword and the associated word as characteristic of target users; otherwise, saving the keyword that represents the characteristic of target users as the characteristic of target users.

5. A system for collecting user information, comprising:
a user characteristics unit (100), adapted to save a characteristic of target users;
a content analyzing unit (200), adapted to obtain a short message sent or received by a user, match content of the short message with the characteristic of target users, determine whether the user meets the characteristic of target users according to the match result, collect user information that identifies the user, and save the user information into a user storage unit (300) if the user meets the characteristic of target users;
a user storage unit (300), adapted to store the user information according to the type of characteristics;
**characterized in that**, the user characteristics unit (100) further comprises:
a characteristics collection interface unit (102), adapted to receive an input keyword that represents the characteristic of target users;
an associated content storage unit (104), adapted to store the keyword and associated word to the keyword;
a match condition generating unit (106), adapted to search the associated content storage unit (104) for the associated word corresponding to the keyword that represents the characteristic of target users; if any associated word is found, saving the keyword and the associated word into the match condition storage unit (108) as characteristic of target users; if no associated word is found, saving the keyword that represents the characteristic of target users into the match condition storage unit (108) as characteristic of target users; and
a match condition storage unit (108), adapted to store the characteristic of target users.

6. The system according to claim 5, **characterized in that** wherein the content analyzing unit (200) is further adapted to match the Unicode of the word contained in a short message with the Unicode of a keyword and/or associated word in the characteristic of target users, if the Unicode of the word contained in the short message includes the Unicode of the keyword and/or the associated word in the characteristic of target users, the content analyzing unit (200) determines the user meets the characteristic of target users, otherwise, the content analyzing unit (200) determines that the user does not meet the characteristic of target users.

7. The system according to claim 6, **characterized in that** the user message is a short message sent or received by the user and the content analyzing unit (200) is further adapted to output and save the short message and the corresponding keyword to the short message wherein, the keyword corresponding to the short message being keyword in the characteristic of target users,
the system further comprising:
an associated word analysis unit (400), adapted to search for a plurality of short messages with a same keyword, determine the word recurring in the plurality of short messages, use the recurring word as an associated word corresponding to the keyword and save the associated word in the associated content storage unit (104).

8. The system according to claim 5 or 7, **characterized in that** the match condition generating unit (106) is further adapted to update information stored in the match condition storage unit (108) by using the information in the associated content storage unit (104).

9. The system according to claim 5, **characterized by** the system further comprising:
a result browsing unit (600), adapted to receive an external query request, search the user storage unit (300) for the user information that meets the characteristics in the query request, and provide the found user information.

## Patentansprüche

1. Verfahren zum Sammeln von Benutzerinformationen, umfassend:
Erhalten (900) einer von einem Benutzer gesendeten oder empfangenen Kurznachricht und einer Charakteristik von Zielbenutzern, die durch ein Schlüsselwort und/oder ein dem Schlüsselwort entsprechendes assoziiertes Wort dargestellt wird;
Bestimmen (902), ob die Kurznachricht ein oder mehrere Wörter enthält, die dem Schlüsselwort und/oder dem assoziierten Wort entsprechen, falls ja, Sammeln (904) der Benutzerinformationen, die den Benutzer identifizieren, und Sichern der Benutzerinformationen gemäß dem Typ von Charakteristika;
**dadurch gekennzeichnet, dass**es weiterhin umfasst:
wenn mehrere Kurznachrichten ein oder mehrere Wörter enthalten, die dem Schlüsselwort und/oder dem assoziierten Wort entsprechen, Durchsuchen (S22) der Kurznachrichten nach einem in jeder Kurznachricht wiederkehrenden Wort und Sichern (S23) des wiederkehrenden Worts als dem Schlüsselwort entsprechendes assoziiertes Wort.

2. Verfahren nach Anspruch 1, **dadurch gekennzeichnet, dass** es weiterhin Folgendes umfasst:
Empfangen (S09) einer externen Anfrageanforderung;
Durchsuchen der gespeicherten Benutzerinformationen gemäß dem Typ der Charakteristik von Zielbenutzern für die Benutzerinformationen, die eine Charakteristik in der Anfrageanforderung erfüllen; und
Liefern (S 10) der gefundenen Benutzerinformationen.

3. Verfahren nach Anspruch 1, **dadurch gekennzeichnet, dass** es weiterhin Folgendes umfasst: Vorbestimmen der Charakteristik von Zielbenutzern.

4. Verfahren nach Anspruch 3, **dadurch gekennzeichnet, dass** es weiterhin Folgendes umfasst:
Aktualisieren der Charakteristik von Zielbenutzern; wobei der Prozess des Aktualisierens weiterhin Folgendes umfasst:
Eingeben eines Schlüsselworts, das die Charakteristik von Zielbenutzern darstellt;
Suchen nach einem mit dem Schlüsselwort assoziierten Wort, das die Charakteristik von Zielbenutzern in dem gesicherten Schlüsselwort und den dem Schlüsselwort entsprechenden assoziierten Wörtern darstellt;
wenn ein assoziiertes Wort gefunden ist, Sichern des Schlüsselworts und des assoziierten Worts als Charakteristik von Zielbenutzern; ansonsten Sichern des Schlüsselworts, das die Charakteristik von Zielbenutzern darstellt, als die Charakteristik von Zielbenutzern.

5. System zum Sammeln von Benutzerinformationen, umfassend:
eine Benutzercharakteristikeinheit (100), die ausgelegt ist zum Sichern einer Charakteristik von Zielbenutzern;
eine Inhaltsanalysiereinheit (200), die ausgelegt ist zum Erhalten einer von einem Benutzer gesendeten oder empfangenen Kurznachricht, Vergleichen eines Inhalts der Kurznachricht mit der Charakteristik von Zielbenutzern, Bestimmen, ob der Benutzer die Charakteristik von Zielbenutzern gemäß dem Vergleichsergebnis erfüllt,
Sammeln von Benutzerinformationen, die den Benutzer identifizieren, und Sichern der Benutzerinformationen in einer Benutzerspeicherungseinheit (300), falls der Benutzer die Charakteristik von Zielbenutzern erfüllt;
eine Benutzerspeicherungseinheit (300), die ausgelegt ist zum Speichern der Benutzerinformationen gemäß dem Typ von Charakteristika;
**dadurch gekennzeichnet, dass** die Benutzercharakteristikeinheit (100) weiterhin Folgendes umfasst:
eine Charakteristiksammelschnittstelleneinheit (102), die ausgelegt ist zum Empfangen eines eingegebenen Schlüsselworts, das die Charakteristik von Zielbenutzern darstellt;
eine assoziierte Inhaltsspeicherungseinheit (104), die ausgelegt ist zum Speichern des Schlüsselworts und assoziierten Worts zu dem Schlüsselwort;
eine Vergleichsbedingungsgenerierungseinheit (106), die ausgelegt ist zum Durchsuchen der assoziierten Inhaltsspeicherungseinheit (104) nach dem dem Schlüsselwort entsprechenden assoziierten Wort, das die Charakteristik von Zielbenutzern darstellt; falls irgendein assoziiertes Wort gefunden ist, Sichern des Schlüsselworts und des assoziierten Worts in der Vergleichsbedingungsspeicherungseinheit (108) als Charakteristik von Zielbenutzern; falls kein assoziiertes Wort gefunden wird, Sichern des Schlüsselworts, das die Charakteristik von Zielbenutzern darstellt, in der Vergleichsbedingungsspeicherungseinheit (108) als Charakteristik von Zielbenutzern; und
eine Vergleichsbedingungsspeicherungseinheit (108), die ausgelegt ist zum Speichern der Charakteristik von Zielbenutzern.

6. System nach Anspruch 5, **dadurch gekennzeichnet, dass** die Inhaltsanalysiereinheit (200) weiterhin ausgelegt ist zum Vergleichen des Unicode des in einer Kurznachricht enthaltenen Worts mit dem Unicode eines Schlüsselworts und/oder assoziierten Worts in der Charakteristik von Zielbenutzern, falls der Unicode des in der Kurznachricht enthaltenen Worts den Unicode des Schlüsselworts und/oder des assoziierten Worts in der Charakteristik von Zielbenutzern enthält, bestimmt die Inhaltsanalysiereinheit (200), dass der Benutzer die Charakteristik von Zielbenutzern erfüllt, ansonsten bestimmt die Inhaltsanalysiereinheit (200), dass der Benutzer die Charakteristik von Zielbenutzern nicht erfüllt.

7. System nach Anspruch 6, **dadurch gekennzeichnet, dass** die Benutzernachricht eine von dem Benutzer gesendete oder empfangene Kurznachricht ist und die Inhaltsanalysiereinheit (200) weiterhin ausgelegt ist zum Ausgeben und Sichern der Kurznachricht und des entsprechenden Schlüsselworts zu der Kurznachricht, wobei das der Kurznachricht entsprechende Schlüsselwort das Schlüsselwort in der Charakteristik von Zielbenutzern ist,
wobei das System weiterhin Folgendes umfasst:
eine Assoziiertes-Wort-Analyseeinheit (400), die ausgelegt ist zum Suchen nach mehreren Kurznachrichten mit einem gleichen Schlüsselwort, Bestimmen des in den mehreren Kurznachrichten wiederauftretenden Worts, Verwenden des wiederauftretenden Worts als ein dem Schlüsselwort entsprechendes assoziiertes Wort und Sichern des assoziierten Worts in der assoziierten Inhaltsspeicherungseinheit (104).

8. System nach Anspruch 5 oder 7, **dadurch gekennzeichnet, dass** die Vergleichsbedingungsgenerierungseinheit (106) weiterhin ausgelegt ist zum Aktualisieren von in der Vergleichsbedingungsspeicherungseinheit (108) gespeicherten Informationen durch Verwenden der Informationen in der assoziierten Inhaltsspeicherungseinheit (104).

9. System nach Anspruch 5, **dadurch gekennzeichnet, dass** das System weiterhin Folgendes umfasst:
eine Ergebnisdurchsuchungseinheit (600), die ausgelegt ist zum Empfangen einer externen Abfrageanforderung, Durchsuchen der Benutzerspeicherungseinheit (300) nach den Benutzerinformationen, die die Charakteristika in der Anfrageanforderung erfüllen, und Liefern der gefundenen Benutzerinformationen.

## Revendications

1. Procédé de collecte d'informations d'utilisateurs, comprenant :
l'obtention (900) d'un message court envoyé ou reçu par un utilisateur, et d'une caractéristique d'utilisateurs cibles qui est représentée par un mot clé et/ou un mot associé correspondant au mot clé ;
le fait déterminer (902) si le message court contient ou non un ou plusieurs mots qui correspondent au mot clé et/ou au mot associé, dans l'affirmative, la collecte (904) des informations d'utilisateur qui identifient l'utilisateur et la sauvegarde des informations d'utilisateur en fonction du type de caractéristiques ;
**caractérisé en ce qu'**il comprend en outre :
quand une pluralité de messages courts contient un ou plusieurs mots qui correspondent au mot clé et/ou au mot associé, l'exploration (S22) des messages courts à la recherche d'un mot se répétant dans chaque message court, et la sauvegarde (S23) du mot récurrent comme mot associé correspondant au mot clé.

2. Procédé selon la revendication 1, **caractérisé en ce qu'**il comprend en outre :
la réception (S09) d'une requête d'interrogation externe ;
l'exploration des informations d'utilisateurs mémorisées en fonction du type de la caractéristique d'utilisateurs cibles à la recherche des informations d'utilisateurs qui satisfont une caractéristique dans la requête d'interrogation ; et
la fourniture (S10) des informations d'utilisateurs trouvées.

3. Procédé selon la revendication 1, **caractérisé en ce qu'**il comprend en outre la prédétermination de la caractéristique d'utilisateurs cibles.

4. Procédé selon la revendication 3, **caractérisé en ce qu'**il comprend en outre :
l'actualisation de la caractéristique d'utilisateurs cibles, le processus d'actualisation comprenant en outre :
l'entrée d'un mot clé qui représente la caractéristique d'utilisateurs cibles ;
la recherche d'un mot associé au mot clé qui représente la caractéristique d'utilisateurs cibles dans le mot clé sauvegardé et les mots associés correspondant au mot clé ;
quand un mot associé est trouvé, la sauvegarde du mot clé et du mot associé comme caractéristique d'utilisateurs cibles ; sinon, la sauvegarde du mot clé qui représente la caractéristique d'utilisateurs cibles comme caractéristique d'utilisateurs cibles.

5. Système de collecte d'informations d'utilisateurs, comprenant :
une unité de caractéristiques d'utilisateurs (100), adaptée pour sauvegarder une caractéristique d'utilisateurs cibles ;
une unité d'analyse de contenu (200) adaptée pour obtenir un message court envoyé ou reçu par un utilisateur, mettre en correspondance le contenu du message court avec la caractéristique d'utilisateurs cibles, déterminer si l'utilisateur satisfait la caractéristique d'utilisateurs cibles en fonction du résultat de la mise en correspondance, collecter les informations d'utilisateurs qui identifient l'utilisateur et
sauvegarder les informations d'utilisateurs dans une unité de mémorisation d'utilisateurs (300) si l'utilisateur satisfait la caractéristique d'utilisateurs cibles ;
une unité de mémorisation d'utilisateurs (300), adaptée pour mémoriser les informations d'utilisateurs en fonction du type de caractéristiques ;
**caractérisé en ce que** l'unité de caractéristiques d'utilisateurs (100) comprend en outre :
une unité d'interface de collecte de caractéristiques (102), adaptée pour recevoir un mot clé d'entrée qui représente la caractéristique d'utilisateurs cibles ;
une unité de mémorisation de contenu associé (104), adaptée pour mémoriser le mot clé et le mot associé au mot clé ;
une unité de génération de condition de correspondance (106), adaptée pour explorer l'unité de mémorisation de contenu associé (104) à la recherche du mot associé correspondant au mot clé qui représente la caractéristique d'utilisateurs cibles ; si un mot associé quelconque est trouvé, le mot clé et le mot associé sont sauvegardés dans l'unité de mémorisation de condition de correspondance (108) comme caractéristique d'utilisateurs cibles ; si aucun mot associé n'est trouvé, le mot clé qui représente la caractéristique d'utilisateurs cibles est sauvegardé dans l'unité de mémorisation de condition de correspondance (108) comme caractéristique d'utilisateurs cibles ; et
une unité de mémorisation de condition de correspondance (108) adaptée pour mémoriser la caractéristique d'utilisateurs cibles.

6. Système selon la revendication 5, **caractérisé en ce que** l'unité d'analyse de contenu (200) est adaptée en outre pour mettre en correspondance l'Unicode du mot contenu dans un message court avec l'Unicode d'un mot clé et/ou d'un mot associé dans la caractéristique d'utilisateurs cibles, si l'Unicode du mot contenu dans le message court comporte l'Unicode du mot clé et/ou du mot associé dans la caractéristique d'utilisateurs cibles, l'unité d'analyse de contenu (200) détermine que l'utilisateur satisfait la caractéristique d'utilisateurs cibles ; sinon l'unité d'analyse de contenu (200) détermine que l'utilisateur ne satisfait pas la caractéristique d'utilisateurs cibles.

7. Système selon la revendication 6, **caractérisé en ce que** le message d'utilisateur est un message court envoyé ou reçu par l'utilisateur et l'unité d'analyse de contenu (200) est adaptée en outre pour produire en sortie et sauvegarder le message court et le mot clé correspondant au message court, le mot clé correspondant au message court étant le mot clé dans la caractéristique d'utilisateurs cibles,
le système comprenant en outre :
une unité d'analyse de mot associé (400), adaptée pour rechercher une pluralité de messages courts ayant un même mot clé, déterminer le mot récurrent dans la pluralité de messages courts, utiliser le mot récurrent comme mot associé correspondant au mot clé et sauvegarder le mot associé dans l'unité de mémorisation de contenu associé (104).

8. Système selon la revendication 5 ou 7, **caractérisé en ce que** l'unité de génération de condition de correspondance (106) est adaptée en outre pour actualiser les informations mémorisées dans l'unité de mémorisation de condition de correspondance (108) en utilisant les informations dans l'unité de mémorisation de contenu associé (104).

9. Système selon la revendication 5, **caractérisé en ce qu'**il comprend en outre :
une unité de consultation de résultat (600), adaptée pour recevoir une requête d'interrogation externe, explorer l'unité de mémorisation d'utilisateurs (300) à la recherche des informations d'utilisateurs qui satisfont les caractéristiques dans la requête d'interrogation, et fournir les informations d'utilisateurs trouvées.
